# EUROPÄISCHE PATENTSCHRIFT

(11) **EP 3 512 669 B1**
(45) Veröffentlichungstag und Bekanntmachung des Hinweises auf die Patenterteilung: **26.07.2023**
(21) Anmeldenummer: 17787299.1
(22) Anmeldetag: 11.09.2017
(51) Int. Cl.: B25J 13/02, G05G 1/08, G05G 5/03, G06F 3/01, G06F 3/0362

(54) **STEUERVORRICHTUNG UND STEUERVERFAHREN FÜR INDUSTRIELLE MASCHINEN MIT GESTEUERTEN BEWEGUNGSANTRIEBEN**
CONTROL DEVICE AND CONTROL METHOD FOR INDUSTRIAL MACHINES HAVING CONTROLLED MOVEMENT DRIVES
DISPOSITIF DE COMMANDE ET PROCÉDÉ DE COMMANDE POUR MACHINES INDUSTRIELLES À ENTRAÎNEMENT DE DÉPLACEMENT COMMANDÉ

(30) Priorität: 14.09.2016 AT 508212016
(43) Veröffentlichungstag der Anmeldung: 24.07.2019
(73) Patentinhaber: KEBA Industrial Automation GmbH, 4040 Linz (AT)
(72) Erfinder: HANETSEDER, Markus, 4040 Linz (AT); MAIER, Emanuel, 4600 Schleißheim (AT); SCHRATTBAUER, Roland, 4204 Haibach im Mühlviertel (AT); STUMMER, Heinz, 4840 Vöcklabruck (AT); WIMMER, Philipp, 4693 Desselbrunn (AT)
(74) Vertreter: Burger, Hannes
(86) Internationale Anmeldenummer: PCT/AT2017/060222
(87) Internationale Veröffentlichungsnummer: WO 2018/049447

(56) Entgegenhaltungen:
- EP-A1- 1 437 641
- CN-A- 104 908 046

## Beschreibung

Die Erfindung betrifft eine Steuervorrichtung für industrielle Maschinen mit gesteuerten Bewegungsantrieben für Maschinenkomponenten, insbesondere für gesteuert bewegbare Maschinenachsen, sowie ein Verfahren zum Betreiben einer elektronischen Steuervorrichtung für industrielle Maschinen mit gesteuerten Bewegungsantrieben, wie dies in den Ansprüchen 1 und 16 angegeben ist.

Aus der EP 1 403 619 B1 ist ein elektronisches Bediensystem bekannt, welches als Teil eines Fahrerinformationssystems in Kraftfahrzeugen vorgesehen ist. Zudem soll dieses Bediensystem als Anzeige- und Bedienvorrichtung in Zusammenhang mit der Steuerung von Maschinen, zum Beispiel in der industriellen Fertigung, genutzt werden können. Dieses Bediensystem umfasst eine elektronische Steuereinheit, welche über eine Recheneinheit verfügt, eine Anzeigeeinheit, welche zur Visualisierung grafischer Darstellungen geeignet ist, und eine Bedieneinheit, mit welcher manuelle Eingriffe bezüglich der Funktionalitäten des jeweiligen Systems vorgenommen werden können. Zur Veränderung von Parametern des Systems ist dabei vorgesehen, dass eine Anzeigemarke in Art eines Cursors über die Anzeigefläche der Anzeigeeinheit bewegt wird und dadurch eine zur Verfügung stehende Funktion angewählt wird. Nach entsprechender Anwahl der gewünschten Funktion durch cursorartige Verschiebung der Anzeigemarke wird ein weiteres Bedienelement betätigt, um damit Parameter verändern zu können. Dieses zweite Bedienelement ermöglicht beispielsweise eine Veränderung von Parameterwerten in Verbindung mit der zuvor über ein erstes Bedienelement ausgewählten Funktion. Die in dieser Druckschrift beschriebenen Maßnahmen sind für die Steuerung bzw. Beeinflussung von Maschinen mit Bewegungsantrieben nur bedingt geeignet. Die beschriebenen Maßnahmen eignen sich vielmehr für eine Anwendung in Verbindung mit relativ unkritischen Funktionalitäten, wie sie in Fahrerinformationssystemen von Kraftfahrzeugen vorkommen. Eine Bedienung von industriellen Maschinen mit Bewegungsantrieben wäre mit dieser vorbekannten Ausführung nur bedingt zufriedenstellend.

Die EP 1 075 979 B1 beschreibt ein Verfahren zum Betreiben einer Multifunktionsbedieneinrichtung, welche ebenso in Verbindung mit Kraftfahrzeugen vorteilhaft einsetzbar ist. Bei dieser Multifunktionsbedieneinrichtung werden Menüs und/oder Bedienfunktionen auf einer Anzeigeeinheit dargestellt und die besagten Menüs und/oder Funktionen über Tastelemente und zumindest ein Drehbetätigungselement betätigt. Zumindest eines dieser Drehbetätigungselemente ist dabei hinsichtlich seiner Drehrichtungen und Drehstellungen und/oder Raststellungen und/oder Betätigungsanschläge frei programmierbar. Diese freie Programmierung erfolgt dabei derart, dass haptische Rückmeldungen im Drehbetätigungsweg erzeugt werden, die den jeweils abgerufenen Menüs oder Funktionen zugeordnet sind. Jeder Betätigungsfunktion ist dabei ein Satz haptischer Daten zugeordnet, die dynamisch an eine Funktionsdatenänderung angepasst werden. Damit ist eine intuitive Bedienung ermöglicht, nachdem der Bedienperson haptische Rückmeldungen gegeben werden, die in Abhängigkeit der jeweiligen Menüs bzw. Funktionen automatisch angepasst werden. Eine Bedienung von industriellen Maschinen mit Bewegungsantrieben ist mit der angegebenen Vorrichtung jedoch nur bedingt praktikabel.

Die CN 104908046 A beschreibt ein Eingabegerät für eine Robotersteuerung, welches Eingabegerät zur manuellen Vorgabe von Verfahrbewegungen eines Industrieroboters vorgesehen ist. Das Eingabegerät umfasst ein drehbar gelagertes Bedienelement welches von einer Bedienperson zu betätigen ist. Dieses Bedienelement ist mit einem Elektromotor verbunden, welcher bei Beaufschlagung mit elektrischer Energie auf das Bedienelement ein Brems- oder Widerstandsmoment aufbringen kann, um so der Bedienperson ein haptisches, kraftbasierendes Feedback zu geben. Dabei wird vorgeschlagen, den Verdrehwiderstand des Bedienelementes zu erhöhen, wenn festgestellt wurde, dass der Industrieroboter mit einem Hindernis bzw. Objekt kollidiert hat. In jene Verdrehrichtung des Bedienelementes, in der diese Objektkollision aufhebbar ist, ist der Verdrehwiderstand des Bedienelementes jedoch gering, sodass der Industrieroboter vom Hindernis wieder wegbewegt werden kann. Weiters wurde vorgeschlagen, das Bedienelement automatisch von einem Grob-Positionierungsverhalten auf ein Fein-Positionierungsverhalten umzuschalten, wenn die Distanz zwischen dem Roboterarm und der Zielposition geringer ist als eine Mindest-Sicherheitsdistanz. Dadurch soll eine höhere Positioniergenauigkeit erreicht werden.

Die EP 1 437 641 A1 beschreibt ein stationär zu positionierendes Eingabegerät für Computer oder für industrielle Steuerungen zur Vorgabe von Roboterbewegungen. Das Eingabegerät weist drei Bedienelemente auf, welche mit den Fingern von nur einer Hand der Bedienperson innerhalb eines begrenzt verfügbaren Verdrehwinkels verdrehbar sind. Der Verdrehwiderstand dieser Bedienelemente kann dabei mit zunehmender Auslenkung ansteigen, sodass der Bedienperson ein haptisches Feedback über den jeweiligen Auslenkungszustand vorliegt.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, eine möglichst praktikable Bedienung von industriellen Maschinen mit Bewegungsantrieben vorzunehmen.

Insbesondere liegt eine Aufgabe der vorliegenden Erfindung darin, die Bedien- bzw. Programmierbarkeit von Maschinen mit gesteuert verfahrbaren Komponenten bzw. aktiv verstellbaren Maschinenachsen zu verbessern.

Diese Aufgabenstellung wird durch eine Vorrichtung und ein Verfahren gemäß den Ansprüchen gelöst.

Demnach ist eine Steuervorrichtung für industrielle Maschinen mit gesteuerten Bewegungsantrieben für Maschinenkomponenten vorgesehen, welche Steuervorrichtung zumindest eine Mensch-Maschine-Schnittstelle, insbesondere steuerungstechnische Ein- und Ausgabemittel, umfasst. Dabei ist wenigstens ein Bedienelement zur manuellen Beeinflussung oder Vorgabe von Verstellbewegungen von zumindest einer der Maschinenkomponenten, beispielsweise in Art von gesteuert verstellbaren Maschinenachsen, ausgeführt. Die entsprechende Steuervorrichtung zeichnet sich dadurch aus, dass zumindest ein Bedienelement als Drehsteller-Bedienelement mit einem endlos rotierbaren, insbesondere anschlaglos verdrehbaren Betätigungsorgan ausgeführt ist, dass das Betätigungsorgan mit einem gesteuert veränderlichen Drehwiderstand-Generierungsmittel in mechanischer Verbindung bzw. Wechselwirkung steht, dass das Drehwiderstand-Generierungsmittel von einer Auswerte- und Steuervorrichtung ansteuerbar ist, und dass die Auswerte- und Steuervorrichtung und das Drehwiderstand-Generierungsmittel dazu eingerichtet sind, in Abhängigkeit von der Steuervorrichtung bekannten, oder in Abhängigkeit von durch die Steuervorrichtung erfassbaren Maschinenzuständen oder Ereignissen die Drehbeweglichkeit des Betätigungsorganes zu hemmen oder mit einem erhöhten, durch eine Bedienperson haptisch wahrnehmbaren Drehwiderstand zu beaufschlagen.

Durch die angegebenen Maßnahmen ist eine verbesserte manuelle Bedienung bzw. Kontrolle von Bewegungsantrieben bzw. von damit bewegten Maschinenkomponenten ermöglicht. Insbesondere ist dadurch ein Rückmeldekanal ausgehend von der Steuervorrichtung in Richtung zur Bedienperson aufgebaut, wobei der Bedienperson systemrelevante Ereignisse bzw. Maschinenzustände via das Drehsteller-Bedienelement zuverlässig und relativ eindeutig mitgeteilt werden können, insbesondere von der Bedienperson haptisch wahrgenommen werden können. Vorteilhaft ist dabei, dass die Bedienperson das Drehsteller-Bedienelement bzw. dessen Betätigungsorgan während der Generierung von Steuer- bzw. Bewegungsbefehlen zwangsweise berührt bzw. mit den Fingern ergreift und dadurch die haptisch signalisierten Rückmeldungen ausgehend von der Steuervorrichtung zuverlässig erfassen bzw. registrieren kann. Dank der erfindungsgemäßen Maßnahmen kann sich die Bedienperson in vorteilhafter Art und Weise primär auf die Maschine bzw. die manuell angesteuerte Maschinenkomponente konzentrieren und muss die Bedienperson ihren Blick nicht mehr, oder nur vergleichsweise selten, auf allfällige optische Signalisierungen bzw. Anzeigen an der Mensch-Maschine-Schnittstelle richten.

Neben einer Komfortverbesserung für die Bedienperson kann durch die anspruchsgemäßen Maßnahmen vor allem auch eine erhebliche Verbesserung in der Sicherheit bei der Bedienung von Maschinen mit Bewegungsantrieben bzw. gesteuert verfahrbaren Maschinenkomponenten erzielt werden. Diese Sicherheitsverbesserungen beziehen sich dabei sowohl auf ein geringeres Risikopotential bezüglich einer Beschädigung der manuell angesteuerten Maschine bzw. von dessen Werkzeug und/oder Werkstück und/oder von dessen Umfeld, als auch auf ein möglichst geringes Gefährdungspotential gegenüber Menschen im Umfeld der Maschine bzw. gegenüber der Bedienperson selbst. Systemkritische bzw. systemrelevante Ereignisse können nämlich durch die haptisch wahrnehmbare Signalisierung via das Betätigungsorgan des Drehsteller-Betätigungsorganes von der Bedienperson besonders rasch und eindeutig erkannt werden. Ein taktiles Wahrnehmungsvermögen einer Bedienperson ist dabei selbst dann gegeben, wenn es im Umfeld der manuell angesteuerten Maschine bzw. Maschinenkomponente laut ist, die Bedienperson ihre Konzentration auf andere Vorgänge richtet, oder anderweitig abgelenkt ist.

Aber auch dann, wenn es eine Bedienperson verabsäumt, allfällige optische Signalisierungen an der Mensch-Maschine-Schnittstelle rechtzeitig zu evaluieren bzw. überhaupt zu berücksichtigen, können durch die haptische Signalisierungsmaßnahme und durch die unmissverständliche, taktile Wahrnehmbarkeit dieser Signale kritische Situationen vermieden werden. Die angegebene Steuervorrichtung für Maschinen ermöglicht daher eine Erzielung von erhöhter Sicherheit, einen verbesserten Nutzungskomfort und auch einen vergleichsweise fehlervermeidenden bzw. raschen Bedienungsablauf.

Entsprechend einer zweckmäßigen Ausführung sind die Auswerte- und Steuervorrichtung und das Drehwiderstand-Generierungsmittel dazu eingerichtet, die Drehbeweglichkeit des Betätigungsorganes zu hemmen oder mit einem deutlich erhöhten, durch eine Bedienperson haptisch wahrnehmbaren Drehwiderstand zu beaufschlagen, wenn eine von einer Bedienperson mittels dem Betätigungsorgan vorgesehene Bewegungsvorgabe eine Überführung bzw. Verstellung der angesteuerten Maschinenkomponente, beispielsweise einer Maschinenachse, eines Werkzeuges, eines Werkstückes, oder eines Handhabungsobjektes, in eine baulich oder mechanisch bedingte Endlage, in eine Sperrzone oder in einen räumlichen Sperrbereich verursachen würde. Dadurch kann der Bedienperson rechtzeitig signalisiert werden, dass mechanisch bzw. kinematisch bedingte Endlagen oder baulich definierte Grenzbereiche, welche nicht überschritten werden können bzw. dürfen, vorliegen bzw. bald erreicht werden. Schäden bzw. Gefährdungen können so zuverlässig hintan gehalten werden. Zudem können dadurch Bedienungs- bzw. Einstellprozesse in Zusammenhang mit manuell zu verfahrenden Maschinenkomponenten beschleunigt werden.

Gemäß der Erfindung ist in der Steuervorrichtung oder in der Auswerte- und Steuervorrichtung wenigstens eine Warnzone definiert. Bei steuerungstechnischer Erkennung des Erreichens der Warnzone wird dies durch Ansteuerung des Drehwiderstand-Generierungsmittels gegenüber einer Bedienperson haptisch signalisiert. Insbesondere kann dies durch Erzeugen von Rippelmarken oder eines erhöhten Betätigungs- oder Drehwiderstand gegenüber dem Betätigungsorgan erfolgen bzw. bewirkt werden. Dadurch kann die Bedienung von Maschinen mit Bewegungsantrieben markant verbessert, insbesondere vereinfacht bzw. beschleunigt werden. Auch Fehlbedienungen bzw. Gefährdungspotenziale für Mensch und Maschine können dadurch hintan gehalten werden.

Die zumindest eine Warnzone kann einer baulich oder mechanisch bedingten Endlage der Maschine bzw. Maschinenkomponente, einer Sperrzone, oder einem räumlichen Sperrbereich vorgelagert sein. Dadurch kann eine Bedienperson durch gesteuerte Abgabe eines haptischen Feedbacks gewarnt bzw. vorgewarnt werden, bevor die Sperrzone tatsächlich erreicht wird. Ein klar verständliches Feedback kann dabei durch ein spürbares "rippeln" am Betätigungsorgan oder durch einen steigenden Kraftaufwand gegenüber dem Betätigungsorgan gebildet sein. Auch dadurch kann die Bedienbarkeit von Maschinen mit manuell verfahrbaren Maschinenkomponenten verbessert werden.

Die zumindest eine Warnzone kann dabei in der Steuervorrichtung programmtechnisch definiert sein und/oder durch sensorische Mittel bestimmt sein bzw. erfassbar sein. Entsprechendes kann für die zusätzlich oder alternativ vorgesehene Sperrzone und/oder den Sperrbereich gelten. Auch Endlagen bzw. Endanschläge einer Maschinenkomponente können einer Steuervorrichtung durch sensorische und/oder programmtechnische Mittel bekannt sein,

Entsprechend einer praktikablen Weiterbildung kann vorgesehen sein, dass eine Ansteuerung des Drehwiderstand-Generierungsmittels derart erfolgt, dass eine Drehbewegung des Betätigungsorganes in eine erste Drehrichtung, welche ein Überfahren der baulich oder mechanisch bedingten Endlage bedeuten würde, oder welche Drehbetätigung eine Verletzung der Sperrzone oder des räumlichen Sperrbereiches ergeben würde, gehemmt oder gesperrt ist, und eine Drehbewegung des Betätigungsorganes in eine zur ersten Drehrichtung entgegengesetzte, zweite Drehrichtung zugelassen oder verfügbar ist. Dadurch kann eine rasche, eindeutige und fehlervermeidende Erkennung und Vermeidung des Blockadezustandes der Maschine bzw. der j eweiligen Maschinenkomponente erzielt werden.

Gemäß einer zweckmäßigen Ausführung kann die Auswerte- und Steuervorrichtung zum Auslesen und/oder Empfangen und Auswerten von Daten oder Signalen der Steuervorrichtung der industriellen Maschine eingerichtet sein und kann das Drehwiderstand-Generierungsmittel basierend auf diesen Daten oder Signalen seitens der Auswerte- und Steuervorrichtung gesteuert beeinflusst werden. Entsprechende Erfassungs- bzw. Auswertungs- und Steuerungsaufgaben können so von der Auswerte- und Steuervorrichtung übernommen werden, sodass die eigentliche Maschinensteuerung mit den zusätzlichen Aufgaben zur Umsetzung der haptischen Signalisierung nicht belastet werden muss. Zudem kann dadurch eine relativ problemlose Auf- bzw. Umrüstung bestehender Maschinensteuerungen erzielt werden.

Entsprechend einer vorteilhaften Ausbildung kann auch vorgesehen sein, dass die Auswerte- und Steuervorrichtung und das Drehwiderstand-Generierungsmittel dazu eingerichtet sind, in Korrelation zu unterschiedlichen Bewegungsgeschwindigkeiten bzw. in Zusammenhang mit den erlaubten, maximal zugelassenen Bewegungsgeschwindigkeiten der Maschinenkomponenten den Drehwiderstand bzw. die Drehbeweglichkeit des Betätigungsorganes zu verändern. Insbesondere kann vorgesehen sein, in Korrelation zu unterschiedlichen Bewegungsgeschwindigkeiten, insbesondere in Abhängigkeit von jeweils erlaubten oder zugelassenen Bewegungsgeschwindigkeiten der Maschinenkomponenten, den Drehwiderstand oder die Drehbeweglichkeit des Betätigungsorganes zu verändern oder umzuschalten. Auch dadurch werden der Bedienperson maschinenrelevante Ereignisse bzw. Zustände eindeutig signalisiert und für die Bedienperson intuitiv wahrnehmbar gemacht, sodass die Bedienperson rechtzeitig bzw. frühzeitig darauf reagieren kann bzw. Gegenmaßnahmen ergreifen kann.

Insbesondere können die Auswerte- und Steuervorrichtung und das Drehwiderstand-Generierungsmittel dazu eingerichtet sein, den Drehwiderstand des Betätigungsorgans bei hohen Bewegungsgeschwindigkeiten der Maschinenkomponenten niedrig einzustellen - unter der Voraussetzung dass diese hohen Bewegungsgeschwindigkeiten jeweils zulässig sind - und bei vergleichsweise niedrigen, zulässigen bzw. empfehlenswerten Bewegungsgeschwindigkeiten den Drehwiderstand des Betätigungsorgans vergleichsweise hoch einzustellen.

Nach einer vorteilhaften Ausführungsform können die Auswerte- und Steuervorrichtung und das Drehwiderstand-Generierungsmittel dazu eingerichtet sein, Abweichungen zwischen einer bedienerseitig gewünschten oder vorgegebenen Soll-Position bzw. Soll-Geschwindigkeit und einer Ist-Position oder Ist-Geschwindigkeit der angesteuerten Maschinenkomponente, beispielsweise einer zu bewegenden Maschinenachse, zu erfassen, insbesondere zu detektieren, und bei Erreichen eines vordefinierten Schwellwertes dieser Abweichung oder in Abhängigkeit eines Ausmaßes dieser Abweichung den Drehwiderstand des Betätigungsorganes zu verändern, insbesondere zu erhöhen. Dadurch kann allfälligen Schleppfehlern in Bezug auf Bewegungsvorgabe (Wunschposition bzw. Sollgeschwindigkeit) und umgesetzter Bewegungsausführung durch die Maschine (Ist-Position bzw. tatsächliche Verfahrgeschwindigkeit) rechtzeitig entgegengewirkt werden. Insbesondere kann dadurch ein unter Umständen sicherheitskritischer Zustand bzw. ein für die Bedienperson verstörend wirkendes Verhalten der Maschine bzw. Maschinenkomponente hintan gehalten werden. Dies ist insbesondere in Zusammenhang mit der manuellen Bewegung von Industrierobotern, beispielsweise für Teach- bzw. Programmierzwecke, oder in Zusammenhang mit der Bedienung von mehrachsigen verstellbaren oder multifunktionalen Maschinen, wie z.B. Werkzeugmaschinen oder Spritzgießmaschinen, zweckmäßig.

Zweckmäßig kann es auch sein, wenn die Steuervorrichtung für industrielle Maschinen einen Betriebsmodus aufweist, in welchem eine fortwährend ausgeführte Drehbetätigung des Betätigungsorgans in eine zeitlich korrelierte, fortwährende Verstellbewegung der angesteuerten Maschinenkomponente umgesetzt wird. Dadurch kann eine präzise Bewegungsvorgabe und eine intuitive Bewegungssteuerung erzielt werden

Gemäß einer vorteilhaften Ausführung ist die angegebene Steuervorrichtung zur Steuerung der Abläufe einer Spritzgießmaschine vorgesehen und derart ausgeführt, dass eine Sperre oder Hemmung der Drehbeweglichkeit eines Betätigungsorganes zur Aktivierung einer Auswerfereinheit bewirkt wird, wenn eine Spritzgießform der Spritzgießmaschine in ihrem geschlossenen Zustand vorliegt.

Zudem kann die angegebene Steuervorrichtung in vorteilhafter Weise zur Steuerung der Abläufe eines Industrieroboters vorgesehen sein und eine Sperre oder Hemmung der Drehbeweglichkeit des Betätigungsorganes zumindest entlang einer ersten Drehrichtung bewirken, wenn eine manuelle Drehbetätigung dieses Betätigungsorganes entlang der ersten Drehrichtung eine Überführung des Industrieroboters, eines seiner Arme, seines TCP, seines Werkzeuges, oder seines Werkstückes in eine Sperrzone oder in einen räumlichen Sperrbereich verursachen würde.

Entsprechend einer praktikablen Maßnahme können die Auswerte- und Steuervorrichtung und das Drehwiderstand-Generierungsmittel dazu eingerichtet sein, bei Annäherung einer Maschinenkomponente der angesteuerten Maschine an eine baulich bzw. konstruktiv bedingte Endlage, oder an eine vordefinierte Sperrzone, oder an einen vordefinierten, räumlichen Sperrbereich den Drehwiderstand am Betätigungsorgan zu erhöhen. Dadurch werden entsprechende Annäherungen für die Bedienperson unmissverständlich wahrnehmbar. Gegen- bzw. Vermeidungsmaßnahmen können dadurch von der Bedienperson frühzeitig ergriffen werden.

Gemäß einer zweckmäßigen Ausführung ist das Drehsteller-Bedienelement dazu eingerichtet, einen programmierten Bewegungsablauf, insbesondere eine in der Steuervorrichtung hinterlegte bzw. abgebildete Bewegungsbahn, durch Drehbewegungen des Betätigungsorganes sequentiell abzurufen bzw. schrittweise abzufahren. Die Auswerte- und Steuervorrichtung und das Drehwiderstand-Generierungsmittel sind dabei dazu eingerichtet, den Drehwiderstand des Betätigungsorganes in Abhängigkeit der Bewegungsgeschwindigkeit der Maschine oder der jeweils angesteuerten Maschinenkomponente zu verändern, insbesondere zu erhöhen und zu senken. Dadurch kann die Qualität der jeweiligen Maschinenbedienung weiter gesteigert werden.

Ferner kann das Drehsteller-Bedienelement dazu eingerichtet sein, Sequenzen eines programmierten, insbesondere eines in der Steuervorrichtung bereits hinterlegten Bewegungsablaufes, beispielsweise eine Bewegungsbahn, durch Drehbewegungen des Betätigungsorganes sequentiell abzurufen bzw. abzufahren. Die Auswerte- und Steuervorrichtung und das Drehwiderstand-Generierungsmittel sind dabei dazu eingerichtet, den Drehwiderstand des Betätigungsorganes kurzzeitig zu erhöhen und so eine für die Bedienperson spür- und überwindbare Betätigungsschwelle zur haptischen Signalisierung eines Sequenz-Endes oder eines Sequenz-Wechsels zu erzeugen. Einstell- bzw. Testläufe von Maschinen, insbesondere von Werkzeugmaschinen wie z.B. Fräs- oder Drehautomaten, können dadurch komfortabel und zugleich fehlervermeidend ausgeführt werden.

Zudem kann das Drehsteller-Bedienelement dazu eingerichtet sein, einen programmierten, insbesondere einen in der Steuervorrichtung bereits hinterlegten Bewegungsablauf, beispielsweise eine Bewegungsbahn, durch Drehbewegungen des Betätigungsorganes abzurufen bzw. abzufahren. Die Auswerte- und Steuervorrichtung und das Drehwiderstand-Generierungsmittel sind dabei dazu eingerichtet, den Drehwiderstand des Betätigungsorganes in Abhängigkeit der Aktivierung oder Deaktivierung von Zusatzkomponenten oder Zusatzfunktionen, beispielsweise einer Druckluftdüse, einer Kühlmittelversorgung, eines Bearbeitungswerkzeuges, einer Schweißvorrichtung, oder einer Klemmvorrichtung, kurzzeitig zu erhöhen und so eine für die Bedienperson spür- und überwindbare Betätigungsschwelle zur haptischen Signalisierung der Aktivierung oder Deaktivierung der Zusatzkomponente oder Zusatzfunktion zu erzeugen. Auch dadurch kann die Prüfung bzw. Veränderung eines zumindest teilweise bereits erstellten Bearbeitungsprogrammes einer Maschine, insbesondere einer Bearbeitungs- bzw. Werkzeugmaschine, oder eines Ablaufprogrammes eines Industrieroboters, erleichtert werden.

Die Aufgabe der Erfindung wird weiters durch das anspruchsgemäße Verfahren zum Betreiben einer elektronischen Steuervorrichtung für industrielle Maschinen gelöst. Die damit erzielbaren vorteilhaften Wirkungen und technischen Effekte sind den vorstehenden Ausführungen und den nachfolgenden Beschreibungsteilen zu entnehmen.

Zum besseren Verständnis der Erfindung wird diese anhand der nachfolgenden Figuren, welche mögliche Ausführungsbeispiele veranschaulichen, näher erläutert.

Es zeigen jeweils in stark vereinfachter, schematischer Darstellung:
- Fig. 1: eine aus mehreren Maschinen, insbesondere Industrierobotern, gebildete technische Anlage und ein dabei eingesetztes, elektronisches Steuerungssystem, welches Steuerungssystem mehrere Steuervorrichtungen und eine Mensch-Maschine-Schnittstelle in Art eines tragbaren Handbediengerätes umfasst;
- Fig. 2: eine Produktionsmaschine, insbesondere eine Spritzgießmaschine, welche eine elektronische Steuervorrichtung und eine daran angebundene Mensch-Maschine-Schnittstelle in Art eines stationären Bedienpanels umfasst;
- Fig. 3: das Bedienpanel der Produktionsmaschine nach Fig. 2;
- Fig. 4: eine Steuervorrichtung für industrielle Maschinen mit einem Drehsteller-Bedienelement, welches zur Bedienung oder Beeinflussung von Bewegungsantrieben dient und zudem zur haptischen Signalisierung von Maschinenzuständen oder Ereignissen der Steuervorrichtung eingerichtet ist;
- Fig. 5: ein Drehsteller-Bedienelement in Zusammenhang mit der Bedienung von Bewegungsantrieben eines Industrieroboters;
- Fig. 6: ein Schaubild zur Veranschaulichung einer möglichen Wirkungsweise des Drehsteller-Bedienelementes nach Fig. 4 oder Fig. 5 in Abhängigkeit der Verfahrgeschwindigkeit von Maschinenachsen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

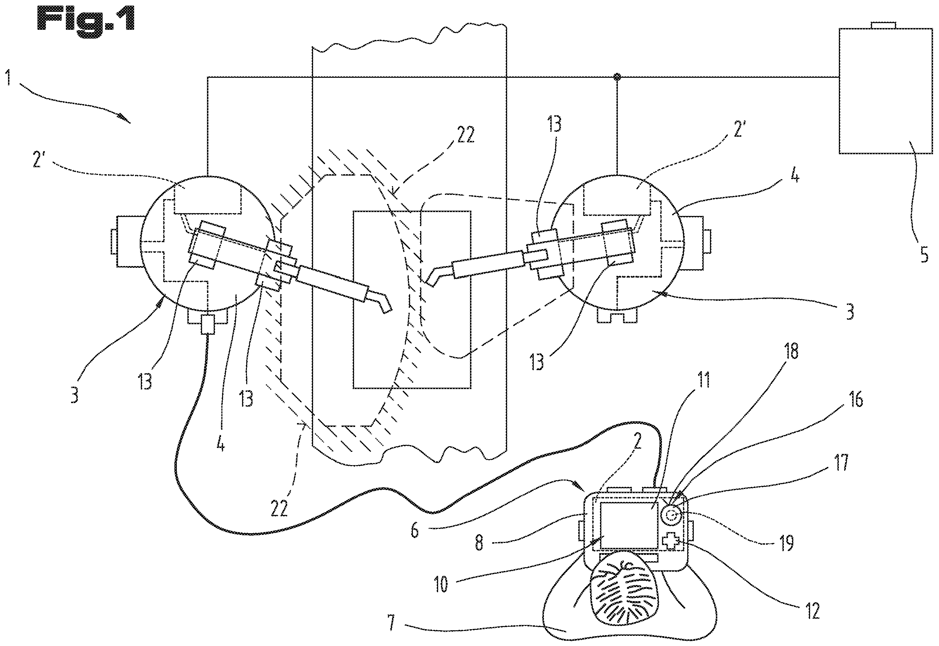

In den Fig. 1 bis 3 sind Ausführungsbeispiele von elektrotechnischen bzw. elektronischen Steuerungssystemen 1 gezeigt, die für die Automatisierung bzw. Steuerung von industriellen Anlagen eingesetzt werden können. Eine solche industrielle Anlage bzw. dessen Steuerungssystem 1 umfasst wenigstens eine elektronische Steuervorrichtung 2, 2` bzw. kann auch eine Mehrzahl von verteilt angeordneten elektronischen Steuervorrichtungen 2, 2` vorgesehen sein. Eine entsprechende Anlage umfasst zumindest eine Maschine 3 bzw. eine Mehrzahl von gegebenenfalls interagierenden Maschinen 3 bzw. Maschinenkomponenten. Die zumindest eine elektronische Steuervorrichtung 2, 2` ist vorzugsweise softwaregesteuert ausgeführt und dient primär dazu, die jeweiligen Steuerungsfunktionen der jeweiligen industriellen Maschine 3 umzusetzen bzw. die Abläufe der Maschine 3 überwachen, beeinflussen und/oder programmieren zu können.

Entsprechend der Ausführung nach Fig. 1 ist eine solche industrielle Maschine 3 durch wenigstens einen Industrieroboter 4 gebildet. Ein solcher Industrieroboter 2 kann Bestandteil einer Montage- bzw. Fertigungsanlage sein. Durch eine datentechnische Vernetzung der jeweiligen Steuervorrichtungen 2, 2` kann vorgesehen sein, dass die Industrieroboter 4 steuerungstechnisch interagieren können. Eine solche daten- bzw. steuerungstechnische Vernetzung zwischen mehreren Industrierobotern 4 kann auch einen zentralen Leitrechner 5 umfassen. Hinsichtlich einer zentralen, dezentralen, hierarchischen oder anderweitig aufgebauten Steuerungsarchitektur und Vernetzung sind dabei vielfältigste Ausführungsformen denkbar, welche entsprechend den jeweiligen Erfordernissen gewählt werden können.

Zumindest einer Steuervorrichtung 2` in zumindest einer Maschine 3 ist dabei zumindest eine Mensch-Maschine-Schnittstelle 6 (HMI) zugeordnet bzw. zuordenbar. Mittels dieser Mensch-Maschine-Schnittstelle 6 sind steuerungsrelevante Interaktionen zwischen einer Bedienperson 7 und der jeweiligen Maschine 3 ermöglicht.

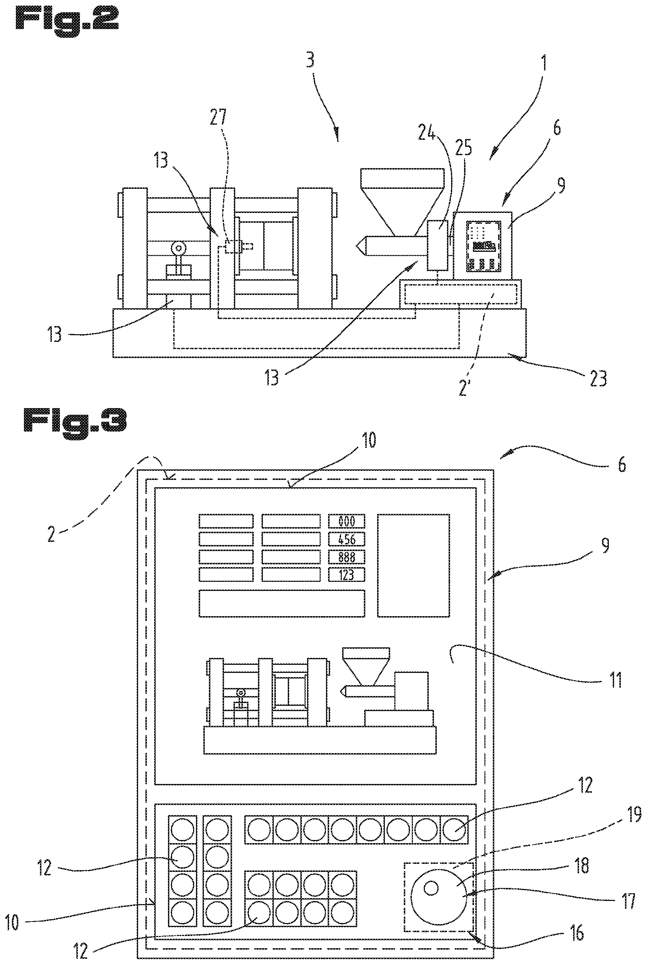

Beim Ausführungsbeispiel gemäß Fig. 1 ist die steuerungstechnische Mensch-Maschine-Schnittstelle 6 durch ein mobiles bzw. tragbares Handbediengerät 8 gebildet. Bei der Ausführungsform nach Fig. 2 ist die Mensch-Maschine-Schnittstelle 6 durch ein stationäres Bedienpanel 9 definiert. Die jeweiligen Mensch-Maschine-Schnittstellen 6 können somit auch als Bedienerschnittstellen bezeichnet werden.

Ein gattungsgemäßes Handbediengerät 8 bzw. Bedienpanel 9 weist wenigstens eine Eingabevorrichtung 10, wie zum Beispiel einen berührungssensitiven Bildschirm 11, Eingabetasten 12, Schalter, oder sonstige elektrische oder elektromechanische Eingabemittel auf. Zudem können visuell und/oder akustisch erfassbare Ausgabemittel vorgesehen sein. Bei einem gattungsgemäßen Handbediengerät 8 bzw. Bedienpanel 9 können insbesondere der zuvor erwähnte berührungssensitive Bildschirm 11, sowie Leuchtelemente bzw. Signalisierungslampen zur Anzeige von systemrelevanten Daten bzw. Zuständen vorgesehen sein. Der Funktionsumfang und die Ausführungsform der jeweiligen Eingabevorrichtung bzw. der jeweiligen Ausgabevorrichtung hängen dabei stark von der jeweiligen Anwendung, insbesondere von der technischen Komplexität der zu steuernden Maschine 3 bzw. Anlage ab. Wesentlich ist dabei, dass die Bedienperson 7 mittels der Eingabevorrichtung 10 und einer geeigneten Ausgabevorrichtung, insbesondere mittels dem zuvor genannten berührungssensitiven Bildschirm 11, die benötigten steuerungstechnischen Abläufe kontrollieren bzw. überwachen, beeinflussen und/oder programmieren kann.

Die in der Mensch-Maschine-Schnittstelle 6, insbesondere im Handbediengerät 8 bzw. im Bedienpanel 9 ausgeführte Steuervorrichtung 2 und die einer Maschine 3 zugeordnete Steuervorrichtung 2' können dabei über kabelgebundene und/oder drahtlos ausgeführte Kommunikationsschnittstellen in datentechnischer bzw. steuerungstechnischer Wechselwirkung stehen.

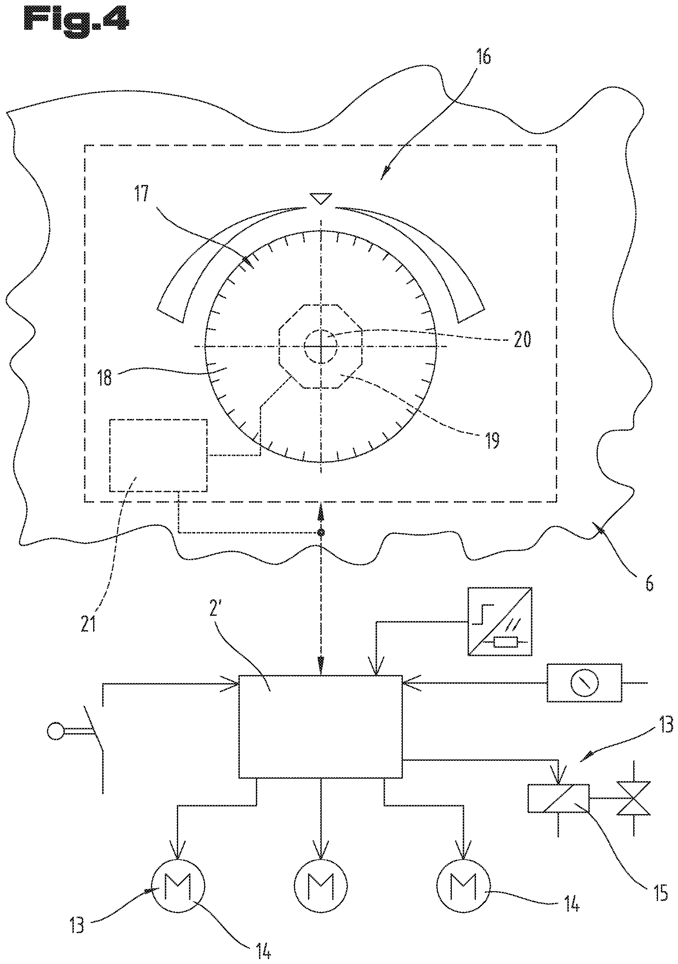

Wie an sich bekannt, sind zur Automatisierung der jeweiligen Maschinen 3 steuerbare, insbesondere wenigstens aktivier- und deaktivierbare Bewegungsantriebe 13 vorgesehen, welche mit der jeweiligen Steuervorrichtung 2` leitungsverbunden sind. Häufig sind solche Bewegungsantriebe 13 auch hinsichtlich ihrer Antriebsgeschwindigkeit und/oder Antriebsleistung bzw. Antriebskraft bedarfsabhängig einstell- bzw. veränderbar. Derartige Bewegungsantriebe 13 können, wie in Fig. 4 veranschaulicht, durch Motoren 14, durch Magnetventile 15 oder sonstige Elemente zur aktiven bzw. steuerbaren Bewegung von Maschinenkomponenten gebildet sein. Unter den entsprechenden Bewegungsantrieben 13 sind auch Aktoren zu verstehen, mit welchen eine Verstellbewegung einer Maschinenkomponente erzeugt bzw. eingeleitet werden kann. Ein solcher Bewegungsantrieb 13 und die jeweilige Maschinenkomponente können dabei auch als Maschinenachse bezeichnet werden. Unter einer steuerbaren Maschinenkomponente bzw. Maschinenachse kann zum Bespiel ein Gelenksarm eines Industrieroboters 4, eine Vorschubeinheit, ein Bearbeitungsaggregat einer Werkzeugmaschine, ein Stellantrieb einer Produktionsmaschine, und dergleichen verstanden werden. An eine solche Maschinen-Steuervorrichtung 2' können typischerweise auch eine Mehrzahl von Sensoren, Endschalter und/oder Geber angeschlossen sein, wie dies in Fig. 4 völlig exemplarisch dargestellt wurde. Dadurch können Bewegungs- bzw. Funktionsabläufe der jeweiligen Maschine vollautomatisch oder zumindest teilautomatisch ausgeführt werden bzw. automatisiert überwacht werden.

Zur manuellen Beeinflussung bzw. zur Programmierung der jeweiligen Bewegungsantriebe 13 bzw. Maschinenkomponenten ist an der jeweiligen Mensch-Maschine-Schnittstelle 6 zumindest ein Bedienelement 16 zur manuellen Beeinflussung oder Vorgabe von Verstellbewegungen von zumindest einer der Maschinenkomponenten bzw. Maschinenachsen vorgesehen. Diese manuelle Beeinflussung oder Vorgabe von Verstellbewegungen durch eine Bedienperson 7umfasst vorzugsweise die Möglichkeit einer Geschwindigkeits- und/oder Leistungsver-änderung des anzusteuernden bzw. selektiv ansteuerbaren Bewegungsantriebes 13. Zudem können Bedienelemente, insbesondere Tast- oder Schaltelemente, ausgeführt sein, welche zur Aktivierung und Deaktivierung eines ausgewählten bzw. ansteuerbaren Bewegungsantriebes 13 vorgesehen sind.

Zumindest eines der Bedienelemente 16 an der Mensch-Maschine-Schnittstelle 6 ist dabei als Drehsteller-Bedienelement 17 mit einem endlos bzw. anschlaglos verdrehbaren Betätigungsorgan 18 ausgeführt. Endlose Verdrehbarkeit bedeutet dabei, dass das Drehsteller-Bedienelement 17 bzw. dessen Betätigungsorgan 18 derart ausgeführt ist, dass es keine mechanischen Endanschläge bzw. keine dauerhafte Begrenzung hinsichtlich der Drehbeweglichkeit des Betätigungsorganes 18 gibt. Dies im Unterschied zu einem typischen Potentiometer bzw. einstellbaren, ohmschen Widerstand, bei welchem ein Verdreh- bzw. Einstellbereich von üblicherweise etwa 270° gegeben ist. Das anspruchsgemäße Drehsteller-Bedienelement 17 ist vielmehr mit einem sogenannten Override-Potentiometer vergleichbar bzw. kann das Drehsteller-Bedienelement 17 als endlos drehbeweglicher Inkrementalgeber ausgeführt sein. Wesentlich ist, dass das Drehsteller-Bedienelement 17 eine endlose Rotierbarkeit seines beispielsweise scheiben- oder radförmigen Betätigungsorganes 18 bzw. eine damit einhergehende, unbegrenzte Abgabe von Sensorimpulsen bzw. Inkrementen ermöglicht.

Das Betätigungsorgan 18 steht dabei mit einem gesteuert veränderlichen Drehwiderstand-Generierungsmittel 19 in mechanischer Verbindung bzw. Wechselwirkung. Insbesondere ist eine mechanische Kopplung bzw. Wechselwirkung zwischen dem Drehwiderstand-Generierungsmittel 19 und dem Betätigungsorgan vorgesehen, durch welche die Drehbeweglichkeit des Betätigungsorgans beeinflussbar, insbesondere gesteuert variierbar ist. Das Drehwiderstand-Generierungsmittel 19 kann dabei auf eine Drehachse 20 im Drehsteller-Bedienelement 17 direkt oder indirekt einwirken. Die Drehachse 20 kann dabei zur drehbeweglichen Lagerung des Betätigungsorganes 18 vorgesehen sein. Alternativ kann das Betätigungsorgan 18 auch auf einer anderen, mit der Drehachse 20 bewegungsgekoppelten Achse gelagert sein. Somit kann vorgesehen sein, dass das Betätigungsorgan mit einem gesteuert veränderlichen Drehwiderstand-Generierungsmittel 19 in Bewegungsverbindung steht oder damit in Bewegungsverbindung versetzbar ist.

Als Drehwiderstand-Generierungsmittel 19 können insbesondere magnetorheologisch wirkende Systeme, elektromagnetisch wirkende Systeme, oder auch elektromechanisch wirkende Brems- bzw. Blockiersysteme eingesetzt werden. Wesentlich ist, dass eine steuerbare Wechselwirkung zwischen dem Drehwiderstand-Generierungsmittel 19 und dem Betätigungsorgan 18 derart aufgebaut werden kann, dass eine einstellbare Hemmung und/oder Blockierung der Drehbeweglichkeit des Betätigungsorganes 18 möglich ist. Hierzu ist das Drehwiderstand-Generierungsmittel 19, welches unmittelbar im bzw. am Drehsteller-Bedienelement 17 ausgeführt sein kann, von einer elektronischen Auswerte- und Steuervorrichtung 21 ansteuerbar.

Die Auswerte- und Steuervorrichtung 21 kann dabei beliebige örtliche Zuordnungen haben. Beispielsgemäß kann diese dem mobilen Handbediengerät 8 oder dem Bedienpanel 9 zugeordnet sein. Es ist aber auch möglich, dass diese Auswerte- und Steuervorrichtung 21 ein Bestandteil bzw. eine Teilkomponente der eigentlichen Steuervorrichtungen 2` der jeweiligen Maschinen 3 darstellt bzw. softwaretechnisch in diesen Steuervorrichtungen 2` implementiert ist. Zweckmäßig ist es jedoch, die Auswerte- und Steuervorrichtung 21 örtlich möglichst nahe zum anzusteuernden Drehsteller-Bedienelement 17 zu positionieren. Dabei kann eine signaltechnische Verbindung zwischen der jeweiligen Steuervorrichtung 2' und der Auswerte- und Steuervorrichtung 21 ausgeführt sein, um die jeweiligen relevanten datentechnischen Informationen übermitteln bzw. austauschen zu können, wie dies in Fig. 4 mit einem strichlierten Doppelpfeil schematisch angedeutet wurde. Die Auswerte- und Steuervorrichtung 21 kann aber auch Bestandteil der Steuervorrichtung 2 des Handbediengerätes 8 bzw. des Bedienpanels 9 sein.

Um einer Bedienperson 7 eine einfache, möglichst intuitive und letztendlich fehlervermeidende sowie rasche Bedienung von zumindest einem Bewegungsantrieb 13, insbesondere von zumindest einer Maschinenachse der industriellen Maschine 3 zu ermöglichen, ist vorgesehen, dass die Auswerte- und Steuervorrichtung 21 und das Drehwiderstand-Generierungsmittel 19 die Drehbeweglichkeit des Betätigungsorgans 18 hemmen oder mit einem erhöhten, durch eine Bedienperson 7 haptisch wahrnehmbaren Drehwiderstand beaufschlagen können. Diese steuerbare, in ihrer Intensität bzw. Wirkung vorzugsweise variierbare Hemmbarkeit bzw. Blockierbarkeit der Drehbeweglichkeit des Betätigungsorganes 18 bzw. des gesamten Drehsteller-Bedienelementes 17 erfolgt dabei in Abhängigkeit von in der Steuervorrichtung 2, 2` rechnerisch ermittelten oder programmtechnisch hinterlegten Maschinenzuständen oder Ereignissen und/oder in Abhängigkeit von durch die Steuervorrichtung 2, 2` sensorisch erfassbaren Maschinenzuständen oder Ereignissen. Die steuerbare Hemmung der Drehbeweglichkeit kann dabei bis zu einer Blockierung bzw. Sperre der Drehbeweglichkeit des Betätigungsorgans 18 führen. Dadurch kann der Bedienperson 7 ausgehend von der Steuervorrichtung 2, 2` bzw. indirekt via die Auswerte- und Steuervorrichtung 21 eine haptische Rückmeldung in Bezug auf potentiell kritische Ereignisse oder systemrelevante Zustände der jeweils angesteuerten Maschine 3 vermittelt werden. Verschiedene Varianten von Maschinenzuständen bzw. Maschinenereignissen, zu welchen zweckmäßigerweise eine steuerungstechnische Rückmeldung an die Bedienperson 7 vorgesehen und eine haptische Signalisierung mittels dem Drehsteller-Bedienelement 17 eingerichtet sein kann, werden nachstehend erläutert.

Entsprechend einer zweckmäßigen Ausführungsform kann vorgesehen sein, dass die Auswerte- und Steuervorrichtung 21 und das Drehwiderstand-Generierungsmittel 19 dazu eingerichtet sind, die Drehbeweglichkeit des Betätigungsorgans 18 zu hemmen oder mit einem deutlich erhöhten, durch eine Bedienperson 7 haptisch wahrnehmbaren Drehwiderstand zu beaufschlagen, wenn eine von einer Bedienperson 7 mittels dem Betätigungsorgan 18 vorgesehene Bewegungsvorgabe, insbesondere ein entsprechender Bewegungs-Steuerbefehl, eine Verstellbewegung der angesteuerten Maschinenkomponente, beispielsweise eine Maschinenachse, ein Werkzeug, ein Werkstück, oder ein Handhabungsobjekt, entweder in eine baulich oder mechanisch bedingte Endlage, oder in eine Sperrzone 22, oder in einen räumlichen Sperrbereich verursachen würde. Dadurch kann eine Verletzung der typischerweise softwaremäßig bzw. programmtechnisch definierten Sperrbereiche bzw. Sperrzonen 22 unterbunden und somit eine Gefährdung von Menschen bzw. technischen Objekten hintan gehalten werden. Eine derartige Maßnahme ist insbesondere in Verbindung mit der manuellen Steuerung bzw. Bedienung von Industrierobotern 4 zweckmäßig. Auch Irritationen der Bedienperson 7, welche Unzufriedenheit oder unerwünschte Gegenmaßnahmen hervorrufen können, können durch das haptische Feedback via das Drehsteller-Bedienelement 17 optimiert hintan gehalten werden. Entsprechend einer praktikablen Maßnahme ist zumindest eine gesteuerte Aktivierbarkeit bzw. Deaktivierbarkeit des Drehwiderstand-Generierungsmittels19 vorgesehen.

Entsprechend einer Weiterbildung kann auch vorgesehen sein, bereits bei einer Annäherung einer Maschinenkomponente der angesteuerten Maschine 3 bzw. des jeweiligen Industrieroboters 4 an eine baulich bzw. konstruktiv bedingte Endlage, oder an eine vordefinierte Sperrzone 22, oder an einen vordefinierten, räumlichen Sperrbereich den Drehwiderstand am Betätigungsorgan 18 zu erhöhen.

Die Erhöhung des Drehwiderstandes bzw. des entsprechenden Halte- bzw. Bremsmomentes gegenüber dem Betätigungsorgan 18 kann auch stufenlos bzw. kontinuierlich, oder abgestuft erfolgen. Dadurch wird der Bedienperson 7 schon früh bzw. rechtzeitig signalisiert, dass bei einer Beibehaltung des aktuellen Bewegungs-Steuerbefehls demnächst Zustände bzw. Ereignisse eintreten, welche unzulässig sind bzw. vermieden werden sollten.

Durch die angegebenen Maßnahmen können somit einer Bedienperson 7 potentiell eintretende Ereignisse, welche einer besonderen Aufmerksamkeit durch die Bedienperson 7 bedürfen, möglichst zeitnah und überaus intuitiv signalisiert werden. Allfälligen Unachtsamkeiten bzw. Konzentrationsverlusten einer Bedienperson 7, welche zu Stillständen oder Gebrechen an der angesteuerten Maschine 3, oder zu Produktionsverzögerungen führen können, kann dadurch entgegen gewirkt werden.

Ein Drehsteller-Bedienelement 17 bietet dabei im Vergleich zu einem linearbeweglich verstellbaren Bedienelement, insbesondere in Art eines Schiebereglers, erhebliche Vorteile, unter anderem im Hinblick auf Robustheit, Abdichtbarkeit, endloser Betätigbarkeit aufgrund anschlagloser Rotierbarkeit, Einfachheit der Bedienung und dergleichen. Aber auch im Vergleich zu einem mehrachsigen Joystick bzw. zu einem kippbeweglichen Steuerhebel kann ein Drehsteller-Bedienelement 17 viele Vorteile eröffnen.

Das Drehwiderstand-Generierungsmittel 19 kann auch zur Erzeugung von Raststufen eingesetzt werden, welche der Bedienperson 7 den mit dem Betätigungsorgan 18 jeweils zurückgelegten Drehwinkel zumindest haptisch, oder sogar haptisch und akustisch, vermitteln können.

Die Anzahl an leicht überwindbaren jedoch fühlbaren Raststufen kann dabei fix vordefiniert sein, oder in Abhängigkeit der jeweiligen Bewegungsfunktion automatisch angepasst sein. Je nach Erfordernis können dabei grobe oder feine Rastabstufungen vorgesehen sein, wobei bis zu 100 gleichmäßig verteilte Raststufen pro ganzer Umdrehung des Betätigungsorganes 18 von einer Bedienperson 7 ohne Mühe taktil wahrgenommen werden können.

Die anspruchsgemäßen technischen Maßnahmen sind unter anderem in Verbindung mit Produktionsanlagen, welche wenigstens einen Industrieroboter 4 umfassen, vorteilhaft einsetzbar (Fig. 1). Darüber hinaus sind die angegebenen Maßnahmen auch in Verbindung mit einer Spritzgießmaschine 23 vorteilhaft anwendbar, wie dies in Fig. 2 exemplarisch veranschaulicht wurde. Eine solche Spritzgießmaschine 23 umfasst unter andrem - wie an sich bekannt - einen Antriebsmotor 24 für die Drehbewegung einer Plastifizierschnecke, einen hydraulischen Antrieb 25 für die axiale Schneckenbewegung, und anderweitige Bewegungsantriebe, welche via die Steuervorrichtung 2` der Spritzgießmaschine 23 kontrolliert aktivier- und deaktivierbar sind. Weiters umfasst eine solche Spritzgießmaschine 23, wie an sich bekannt, ein Formwerkzeug 26 zur Formung von zu produzierenden Formteilen aus Kunststoff. Gegebenenfalls kann dabei dem Formwerkzeug 26 eine Auswerfereinheit 27 zugeordnet sein, welche via Ansteuerung von der Steuervorrichtung 2` einen zwangsweisen Auswurf von mittels dem Formwerkzeug 26 erzeugten Formteilen ermöglicht.

Zweckmäßige Anwendungen des erfindungsgemäßen Konzeptes werden nachfolgend beschrieben. Insbesondere kann es in Zusammenhang mit einer Spritzgießmaschine 23 vorkommen, dass eine Bewegung einzelner Maschinenachsen bzw. eine Aktivierung von Maschinenfunktionen bzw. Bewegungsantrieben aufgrund des aktuellen Maschinenstatus bzw. Maschinenzustands nicht erlaubt ist. Beispielsweise darf die Auswerfereinheit 27 einer Spritzgießmaschine 23 nicht aktiviert bzw. ausgefahren werden, wenn das Formwerkzeug 26 geschlossen ist. Andernfalls könnte es zu einer Beschädigung der jeweiligen Komponenten kommen. Möchte eine Bedienperson 7 in solch einen Systemzustand die Auswerfereinheit 27 manuell bewegen bzw. aktivieren, so ist dies problematisch und kann erfindungsgemäß das Drehsteller-Bedienelement 17 bzw. das Betätigungsorgan 18 in seiner Verstellbarkeit gesperrt bzw. gehemmt werden. Je nach Situation kann dabei die Rotierbarkeit bzw. Drehbeweglichkeit des Betätigungsorganes 18 in eine oder in beide Drehrichtungen gesperrt sein.

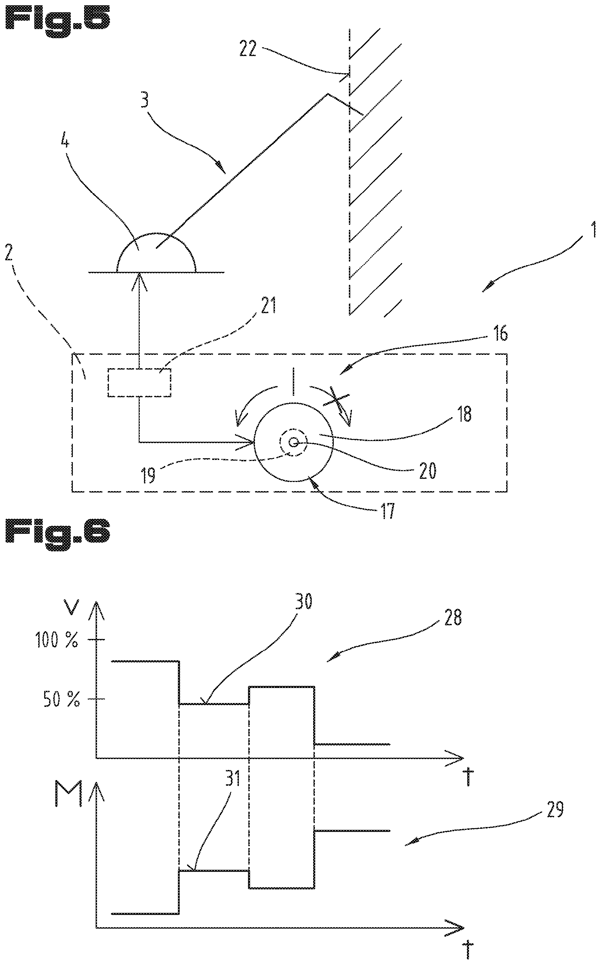

Gemäß einer weiteren Ausführungsform ist die Anwendung der erfindungsgemäßen Maßnahmen in Zusammenhang mit Industrierobotern 4 besonders zweckmäßig. Im Bereich der Robotik dürfen Sperrräume bzw. Sperrzonen 22 - Fig. 1, 5 - vom Industrieroboter 4 typischerweise nicht überschritten bzw. verletzt werden, da ansonsten eine Beschädigung des Industrieroboters 4 oder von peripheren Komponenten, wie zum Beispiel benachbarte Maschinen bzw. Roboter, Förderbänder, Werkstücke und dergleichen, oder sogar eine Gefährdung von Menschen eintreten könnte. Wenn dabei die Bedienperson 7 eine manuell gesteuerte Bewegung des Industrieroboters 4 bzw. einer seiner Maschinenkomponenten in einen Sperrraum bzw. in eine Sperrzone 22 verursachen würde, ist vorgesehen, dass diese Bewegung entweder durch die Steuervorrichtung 2, 2` oder durch die Auswerte- und Steuervorrichtung 21 gestoppt wird und eine fortgesetzte Verdrehung des grundsätzlich anschlaglos verdrehbaren Betätigungsorganes 18 des Drehsteller-Bedienelementes 17 in die entsprechende Betätigungsrichtung gehemmt oder gesperrt wird. Sofern der Industrieroboter 4 dabei erst nach einem Eindringen in die Sperrzone zum Stillstand kommt, kann vorgesehen sein, dass am Betätigungsorgan 18 nur jene Dreh- bzw. Rotationsrichtung freigegeben ist bzw. freigeschaltet wird, durch welche der Industrieroboter 4 wieder aus der Sperrzone 22 herausgefahren werden kann, wie dies in Fig. 5 schematisch veranschaulicht wurde. Im Normal- bzw. Ausgangszustand ist das Betätigungsorgan 18 um seine Drehachse 20 bidirektional verdrehbar.

Die Auswerte- und Steuervorrichtung 21 kann als eigenständige Elektronikeinheit ausgebildet sein, oder aber in der Steuervorrichtung 2 einer Maschine 3 ausgeführt sein. Insbesondere kann die Auswerte- und Steuervorrichtung 21 überwiegend softwaremäßig implementiert sein. Es ist aber auch eine örtlich verteilte Umsetzung denkbar, bei der die entsprechenden Auswertungs- und Steuerungsfunktionen zur Umsetzung der erfindungsgemäßen Ausführung zwischen der Steuervorrichtung 2, 2` und dem Drehsteller-Bedienelement 17 aufgeteilt sind.

In Fig. 6 ist eine zweckmäßige Funktionalität der Steuervorrichtung 2, 2' bzw. der Auswerte- und Steuervorrichtung 21 veranschaulicht. In den Diagrammen 28, 29 wird dabei eine zweckmäßige Korrelation zwischen unterschiedlichen Bewegungsgeschwindigkeiten 30 einer Maschinenkomponente und dem Drehwiderstand M bzw. der Drehbeweglichkeit 31 des Betätigungsorganes 18 dargestellt. Demnach kann vorgesehen sein, dass die Auswerte- und Steuervorrichtung 21 bzw. das Drehwiderstand-Generierungsmittel 19 - Fig. 1 bis 4 - den Drehwiderstand M des Betätigungsorgans 18 bei hohen Bewegungsgeschwindigkeiten niedrig einstellt bzw. niedrig lässt und bei vergleichsweise geringen, systemtechnisch zulässigen Bewegungsgeschwindigkeiten den Drehwiderstand M vergleichsweise hoch bzw. höher einstellt. Dadurch ist für die Bedienperson 7 eine intuitive und fehlervermeidende Bedienung ermöglicht, nachdem seitens des Steuerungssystems 1 bzw. von Seiten der jeweiligen Steuervorrichtung 2, 2` ein haptischer Feedback-Kanal aufgebaut ist. Von besonderem Vorteil ist dabei, dass die Bedienperson 7 ihren Blick bzw. ihre Konzentration vergleichsweise seltener auf die Mensch-Maschine-Schnittstelle 6 richten muss und sich stärker auf die tatsächlichen Bewegungsabläufe bzw. Funktionsabläufe der manuell gesteuerten Maschine 3 konzentrieren kann. Insbesondere kann durch die erfindungsgemäßen Maßnahmen erreicht werden, dass eine Bedienperson 7 die an der Mensch-Maschine-Schnittstelle 6, beispielsweise via den Bildschirm 11 oder via andere optische Ausgabemittel visualisierten Daten bzw. Zustände, vergleichsweise seltener einsehen, insbesondere evaluieren oder kontrollieren muss.

Die zuvor angegebenen technischen Maßnahmen bzw. Verfahrensabläufe sind durch eine Kombination aus hardwaretechnischen und softwaretechnischen Komponenten umsetzbar. Das Schutzbegehren der Anmelderin richtet sich daher sowohl auf Vorrichtungsansprüche, als auch auf entsprechende Verfahrensansprüche.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern lediglich durch die Ansprüche definiert wird.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Steuerungssystem | 30 | Bewegungsgeschwindigkeit |
| 2, 2` | Steuervorrichtung | 31 | Drehbeweglichkeit |
| 3 | Maschine | | |
| 4 | Industrieroboter | | |
| 5 | Leitrechner | | |
| 6 | Mensch-Maschine-Schnittstelle | | |
| 7 | Bedienperson | | |
| 8 | Handbediengerät | | |
| 9 | Bedienpanel | | |
| 10 | Eingabevorrichtung | | |
| 11 | berührungssensitiver Bildschirm | | |
| 12 | Eingabetaste | | |
| 13 | Bewegungsantrieb | | |
| 14 | Motor | | |
| 15 | Magnetventil | | |
| 16 | Bedienelement | | |
| 17 | Drehsteller-Bedienelement | | |
| 18 | Betätigungsorgan | | |
| 19 | Drehwiderstand-Generierungsmittel | | |
| 20 | Drehachse | | |
| 21 | Auswerte- und Steuervorrichtung | | |
| 22 | Sperrzone | | |
| 23 | Spritzgießmaschine | | |
| 24 | Antriebsmotor | | |
| 25 | Antrieb | | |
| 26 | Formwerkzeug | | |
| 27 | Auswerfereinheit | | |
| 28 | Diagramm (v) | | |
| 29 | Diagramm (M) | | |

## Patentansprüche

1. Steuervorrichtung (2, 2') für industrielle Maschinen mit gesteuerten Bewegungsantrieben (13) für Maschinenkomponenten, umfassend
eine Mensch-Maschine-Schnittstelle (6) mit wenigstens einem Bedienelement (16) zur manuellen Beeinflussung oder Vorgabe von Verstellbewegungen von zumindest einer der Maschinenkomponenten, wobei
zumindest ein Bedienelement (16) als Drehsteller-Bedienelement (17) mit einem endlos verdrehbaren Betätigungsorgan (18) ausgeführt ist, wobei
das Betätigungsorgan (18) mit einem gesteuert veränderlichen Drehwiderstand-Generierungsmittel (19) in Bewegungsverbindung steht oder in Bewegungsverbindung versetzbar ist, wobei
das Drehwiderstand-Generierungsmittel (19) von einer Auswerte- und Steuervorrichtung (21) ansteuerbar ist, und wobei
die Auswerte- und Steuervorrichtung (21) und das Drehwiderstand-Generierungsmittel (19) dazu eingerichtet sind, in Abhängigkeit von der Steuervorrichtung (2, 2') bekannten, oder in Abhängigkeit von durch die Steuervorrichtung (2, 2') erfassbaren Maschinenzuständen oder Ereignissen die Drehbeweglichkeit des Betätigungsorganes (18) zu hemmen oder mit einem erhöhten, durch eine Bedienperson haptisch wahrnehmbaren Drehwiderstand zu beaufschlagen
**dadurch gekennzeichnet, dass**
in der Steuervorrichtung (2, 2') oder in der Auswerte- und Steuervorrichtung (21) wenigstens eine Warnzone definiert ist, und dass ein Erreichen der zumindest einen Warnzone durch Ansteuerung des Drehwiderstand-Generierungsmittels (19) gegenüber einer Bedienperson haptisch signalisiert ist, insbesondere durch Erzeugen von Rippelmarken oder von erhöhtem Betätigungs- oder Drehwiderstand gegenüber dem Betätigungsorgan (18).

2. Steuervorrichtung nach Anspruch 1, **dadurch gekennzeichnet, dass** die Auswerte- und Steuervorrichtung (21) und das Drehwiderstand-Generierungsmittel (19) dazu eingerichtet sind, die Drehbeweglichkeit des Betätigungsorganes (18) zu hemmen oder mit einem deutlich erhöhten, durch eine Bedienperson haptisch wahrnehmbaren Drehwiderstand zu beaufschlagen, wenn eine von einer Bedienperson mittels dem Betätigungsorgan (18) vorgesehene Bewegungsvorgabe eine Verstellbewegung der angesteuerten Maschinenkomponente, beispielsweise einer Maschinenachse, eines Werkzeuges, eines Werkstückes, oder eines Handhabungsobjektes, in eine baulich oder mechanisch bedingte Endlage, in eine Sperrzone (22), oder in einen räumlichen Sperrbereich verursachen würde.

3. Steuervorrichtung nach Anspruch 1 oder 2, **dadurch gekennzeichnet, dass** die zumindest eine Warnzone einer baulich oder mechanisch bedingten Endlage, einer Sperrzone (22), oder einem räumlichen Sperrbereich vorgelagert ist.

4. Steuervorrichtung nach einem der vorhergehenden Ansprüche, **dadurch gekennzeichnet, dass** eine Ansteuerung des Drehwiderstand-Generierungsmittels (19) derart erfolgt, dass eine Drehbewegung des Betätigungsorganes (18) in eine erste Drehrichtung, welche ein Überfahren der baulich oder mechanisch bedingten Endlage bedeuten würde, oder eine Verletzung der Sperrzone (22) oder des räumlichen Sperrbereiches ergeben würde, gehemmt oder gesperrt ist, und eine Drehbewegung des Betätigungsorganes (18) in eine zur ersten Drehrichtung entgegengesetzte, zweite Drehrichtung zugelassen oder verfügbar ist.

5. Steuervorrichtung nach einem der vorhergehenden Ansprüche, **dadurch gekennzeichnet, dass** die Auswerte- und Steuervorrichtung (21) zum Auslesen und/oder Empfangen und Auswerten von Daten oder Signalen der Steuervorrichtung (2, 2') der industriellen Maschine (3) eingerichtet ist, und dass das Drehwiderstand-Generierungsmittel (19) basierend auf diesen Daten oder Signalen seitens der Auswerte- und Steuervorrichtung (21) gesteuert beeinflusst ist.

6. Steuervorrichtung nach einem der vorhergehenden Ansprüche, **dadurch gekennzeichnet, dass** die Auswerte- und Steuervorrichtung (21) und das Drehwiderstand-Generierungsmittel (19) dazu eingerichtet sind, in Korrelation zu unterschiedlichen Bewegungsgeschwindigkeiten, insbesondere in Abhängigkeit von jeweils erlaubten oder zugelassenen Bewegungsgeschwindigkeiten der Maschinenkomponenten, den Drehwiderstand oder die Drehbeweglichkeit des Betätigungsorganes (18) zu verändern oder umzuschalten.

7. Steuervorrichtung nach Anspruch 6, **dadurch gekennzeichnet, dass** die Auswerte- und Steuervorrichtung (21) und das Drehwiderstand-Generierungsmittel (19) dazu eingerichtet sind, den Drehwiderstand des Betätigungsorganes (18) bei hohen zulässigen Bewegungsgeschwindigkeiten niedrig einzustellen und bei vergleichsweise niedrigen, zulässigen Bewegungsgeschwindigkeiten vergleichsweise hoch einzustellen.

8. Steuervorrichtung nach einem der vorhergehenden Ansprüche, **dadurch gekennzeichnet, dass** die Auswerte- und Steuervorrichtung (21) und das Drehwiderstand-Generierungsmittel (19) dazu eingerichtet sind, Abweichungen zwischen einer bedienerseitig gewünschten oder vorgegebenen Soll-Position bzw. Soll-Geschwindigkeit und einer Ist-Position oder Ist-Geschwindigkeit der angesteuerten Maschinenkomponente zu erfassen, insbesondere zu detektieren, und bei Erreichen eines vordefinierten Schwellwertes dieser Abweichung oder in Abhängigkeit eines Ausmaßes dieser Abweichung den Drehwiderstand des Betätigungsorganes (18) zu verändern, insbesondere zu erhöhen.

9. Steuervorrichtung nach einem der vorhergehenden Ansprüche, **dadurch gekennzeichnet, dass** sie dazu eingerichtet ist, eine fortwährend ausgeführte Drehbetätigung des Betätigungsorgans (18) in eine zeitlich korrelierte, fortwährende Verstellbewegung der angesteuerten Maschinenkomponente umzusetzen.

10. Steuervorrichtung nach einem der vorhergehenden Ansprüche, **dadurch gekennzeichnet, dass** sie zur Steuerung der Abläufe einer Spritzgießmaschine (23) vorgesehen ist und eine Sperre oder Hemmung der Drehbeweglichkeit eines Betätigungsorganes (18) zur Aktivierung einer Auswerfereinheit (27) bewirkt, wenn ein Formwerkzeug (26) der Spritzgießmaschine (23) in ihrem geschlossenen Zustand vorliegt.

11. Steuervorrichtung nach einem der Ansprüche 1 bis 9, **dadurch gekennzeichnet, dass** sie zur Steuerung der Abläufe eines Industrieroboters (4) vorgesehen ist und eine Sperre oder Hemmung der Drehbeweglichkeit des Betätigungsorganes (18) zumindest entlang einer ersten Drehrichtung bewirkt, wenn eine manuelle Drehbetätigung dieses Betätigungsorganes (18) entlang der ersten Drehrichtung eine Überführung des Industrieroboters (4), eines seiner Arme, seines TCP, seines Werkzeuges, oder seines Werkstückes in eine Sperrzone (22) oder in einen räumlichen Sperrbereich verursachen würde.

12. Steuervorrichtung nach einem der vorhergehenden Ansprüche, **dadurch gekennzeichnet, dass** die Auswerte- und Steuervorrichtung (21) und das Drehwiderstand-Generierungsmittel (19) dazu eingerichtet sind, bei Annäherung einer Maschinenkomponente der angesteuerten Maschine (3) an eine baulich bedingte Endlage, oder an eine vordefinierte Sperrzone (22), oder an einen vordefinierten, räumlichen Sperrbereich, den Drehwiderstand am Betätigungsorgan (18) zu erhöhen.

13. Steuervorrichtung nach einem der vorhergehenden Ansprüche, **dadurch gekennzeichnet, dass** das Drehsteller-Bedienelement (17) dazu eingerichtet ist, einen programmierten Bewegungsablauf, insbesondere eine in der Steuervorrichtung (2, 2') hinterlegte Bewegungsbahn, durch Drehbewegungen des Betätigungsorganes (18) sequentiell abzurufen, und dass die Auswerte- und Steuervorrichtung (21) und das Drehwiderstand-Generierungsmittel (19) dazu eingerichtet sind, den Drehwiderstand des Betätigungsorganes (18) in Abhängigkeit der Bewegungsgeschwindigkeit der Maschine (3) oder der jeweils angesteuerten Maschinenkomponente zu verändern, insbesondere zu erhöhen und zu senken.

14. Steuervorrichtung nach einem der vorhergehenden Ansprüche, **dadurch gekennzeichnet, dass** das Drehsteller-Bedienelement (17) dazu eingerichtet ist, Sequenzen eines programmierten, in der Steuervorrichtung (2, 2') hinterlegten Bewegungsablaufes, beispielsweise eine Bewegungsbahn, durch Drehbewegungen des Betätigungsorganes (18) sequentiell abzurufen respektive abzufahren, und dass die Auswerte- und Steuervorrichtung (21) und das Drehwiderstand-Generierungsmittel (19) dazu eingerichtet sind, den Drehwiderstand des Betätigungsorganes (18) kurzzeitig zu erhöhen und so eine für die Bedienperson spür- und überwindbare Betätigungsschwelle zur haptischen Signalisierung eines Sequenz-Endes oder eines Sequenz-Wechsels zu erzeugen.

15. Steuervorrichtung nach einem der vorhergehenden Ansprüche, **dadurch gekennzeichnet, dass** das Drehsteller-Bedienelement (17) dazu eingerichtet ist, einen programmierten, in der Steuervorrichtung (2, 2') hinterlegten Bewegungsablauf, beispielsweise eine Bewegungsbahn, durch Drehbewegungen des Betätigungsorganes (18) abzurufen respektive abzufahren, und dass die Auswerte- und Steuervorrichtung (21) und das Drehwiderstand-Generierungsmittel (19) dazu eingerichtet sind, den Drehwiderstand des Betätigungsorganes (18) in Abhängigkeit der Aktivierung oder Deaktivierung von Zusatzkomponenten oder Zusatzfunktionen, beispielsweise einer Druckluftdüse, einer Kühlmittelversorgung, eines Bearbeitungswerkzeuges, einer Schweißvorrichtung, oder einer Klemmvorrichtung, kurzzeitig zu erhöhen und so eine für die Bedienperson spür- und überwindbare Betätigungsschwelle zur haptischen Signalisierung der Aktivierung oder Deaktivierung der Zusatzkomponente oder Zusatzfunktion zu erzeugen.

16. Verfahren zum Betreiben einer elektronischen Steuervorrichtung (2, 2') für industrielle Maschinen (3) mit gesteuerten Bewegungsantrieben (13) für Maschinenkomponenten, wobei
eine Mensch-Maschine-Schnittstelle (6) mit wenigstens einem Bedienelement (16) zur manuellen Beeinflussung oder Vorgabe von Verstellbewegungen von zumindest einer der Maschinenkomponenten vorgesehen ist, wobei
zumindest ein Bedienelement (16) als Drehsteller-Bedienelement (17) mit einem endlos verdrehbaren Betätigungsorgan (18) ausgeführt ist, wobei
das Betätigungsorgan (18) mit einem gesteuert veränderlichen Drehwiderstand-Generierungsmittel (19) in Bewegungsverbindung steht oder in Bewegungsverbindung versetzbar ist, und wobei
in Abhängigkeit von der Steuervorrichtung (2, 2') bekannten, oder in Abhängigkeit von durch die Steuervorrichtung (2, 2') erfassbaren Maschinenzuständen oder Ereignissen die Drehbeweglichkeit des Betätigungsorganes (18) gehemmt oder mit einem erhöhten, durch eine Bedienperson haptisch wahrnehmbaren Drehwiderstand beaufschlagt wird,
**dadurch gekennzeichnet, dass**
in der Steuervorrichtung (2, 2') oder in der Auswerte- und Steuervorrichtung (21) wenigstens eine Warnzone definiert ist, und dass ein Erreichen der zumindest einen Warnzone durch Ansteuerung des Drehwiderstand-Generierungsmittels (19) gegenüber einer Bedienperson haptisch signalisiert wird, insbesondere indem Rippelmarken oder erhöhter Betätigungs- oder Drehwiderstand gegenüber dem Betätigungsorgan (18) erzeugt werden.

## Claims

1. A control device (2, 2') for industrial machines having controlled motion drives (13) for machine components, comprising
a human-machine interface (6) with at least one control element (16) for manual influencing or specification of adjustment movements of at least one of the machine components, wherein
at least one control element (16) is implemented as a rotary control element (17) with a continuously rotatable actuating element (18), wherein
the actuating element (18) is connected in terms of motion or can be connected in terms of motion to a rotational resistance generating means (19) that is variable under control, wherein
the rotational resistance generating means (19) can be driven by an analysis and control device (21), and wherein
the analysis and control device (21) and the rotational resistance generating means (19) are equipped to inhibit the rotational mobility of the actuating element (18), or to subject it to an increased rotational resistance that is haptically perceptible by an operator, as a function of machine states or events that are known to the control device (2, 2') or as a function of machine states or events that can be sensed by the control device (2, 2'), **characterized in that**
at least one caution zone is defined in the control device (2, 2') or in the analysis and control device (21), and that a reaching of the at least one caution zone is haptically signaled to an operator by driving of the rotational resistance generating means (19), in particular by creation of ripple marks or of increased actuation resistance or rotational resistance with respect to the actuating element (18).

2. The control device according to claim 1, **characterized in that** the analysis and control device (21) and the rotational resistance generating means (19) are equipped to inhibit the rotational mobility of the actuating element (18), or to subject it to an increased rotational resistance that is haptically perceptible by an operator, when a motion specification provided by an operator by means of the actuating element (18) would cause an adjustment movement of the driven machine component, for example a machine axis, a tool, a workpiece, or an object to be manipulated, into a structurally or mechanically determined end position, into a prohibited zone (22), or into a prohibited spatial area.

3. The control device according to claim 1 or 2, **characterized in that** the at least one caution zone is located ahead of a structurally or mechanically determined end position, a prohibited zone (22), or a prohibited spatial area.

4. The control device according to one of the preceding claims, **characterized in that** a driving of the rotational resistance generating means (19) is accomplished in such a manner that a rotary motion of the actuating element (18) in a first direction of rotation, which would mean an overrunning of the structurally or mechanically determined end position, or would result in an encroachment on the prohibited zone (22) or the prohibited spatial area, is inhibited or blocked, and a rotary motion of the actuating element (18) in a second direction of rotation opposite the first direction of rotation is permitted or available.

5. The control device according to one of the preceding claims, **characterized in that** the analysis and control device (21) is equipped to read out and/or receive and analyze data or signals of the control device (2, 2') of the industrial machine (3), and that the rotational resistance generating means (19) is influenced in a controlled manner by the analysis and control device (21) based on these data or signals.

6. The control device according to one of the preceding claims, **characterized in that** the analysis and control device (21) and the rotational resistance generating means (19) are equipped to change or to switch the rotational resistance or the rotational mobility of the actuating element (18) in correlation with different rates of travel, in particular as a function of relevant allowable or permissible rates of travel of the machine components.

7. The control device according to claim 6, **characterized in that** the analysis and control device (21) and the rotational resistance generating means (19) are equipped to set the rotational resistance of the actuating element (18) low in the event of high permissible rates of travel of the machine components and to set it relatively high in the event of relatively low, permissible rates of travel.

8. The control device according to one of the preceding claims, **characterized in that** the analysis and control device (21) and the rotational resistance generating means (19) are equipped to sense, in particular to detect, deviations between a target position and/or target speed desired or specified on the part of the operator and an actual position or actual speed of the driven machine component, and to change, in particular to increase, the rotational resistance of the actuating element (18) when a predefined threshold value for this deviation is reached, or as a function of a size of this deviation.

9. The control device according to one of the preceding claims, **characterized in that** it is equipped to convert a continuously performed rotary actuation of the actuating element (18) into a time-correlated, continuous adjustment movement of the driven machine component.

10. The control device according to one of the preceding claims, **characterized in that** it is intended for control of the sequences of an injection molding machine (23), and brings about a locking or inhibition of the rotational mobility of an actuating element (18) for activation of an ejector unit (27) when an injection mold (26) of the injection molding machine (23) is in its closed state.

11. The control device according to one of claims 1 to 9, **characterized in that** it is intended for control of the sequences of an industrial robot (4), and brings about a locking or inhibition of the rotational mobility of the actuating element (18), at least in a first direction of rotation, when a manual rotary actuation of this actuating element (18) in the first direction of rotation would cause a transfer of the industrial robot (4), one of its arms, its TCP, its tool, or its workpiece into a prohibited zone (22) or into a prohibited spatial area.

12. The control device according to one of the preceding claims, **characterized in that** the analysis and control device (21) and the rotational resistance generating means (19) are equipped to increase the rotational resistance at the actuating element (18) when a machine component of the driven machine (3) approaches a structurally determined end position, or a predefined prohibited zone (22), or a predefined prohibited spatial area.

13. The control device according to one of the preceding claims, **characterized in that** the rotary control element (17) is equipped to sequentially call up a programmed sequence of motions, in particular a trajectory stored in the control device (2, 2'), through rotary motions of the actuating element (18), and that the analysis and control device (21) and the rotational resistance generating means (19) are equipped to change, in particular to increase and to decrease, the rotational resistance of the actuating element (18) as a function of the rate of travel of the machine (3) or of the relevant driven machine component.

14. The control device according to one of the preceding claims, **characterized in that** the rotary control element (17) is equipped to sequentially call up or, respectively, to follow sequences of a programmed sequence of motions stored in the control device (2, 2'), for example a trajectory, through rotary motions of the actuating element (18), and that the analysis and control device (21) and the rotational resistance generating means (19) are equipped to briefly increase the rotational resistance of the actuating element (18), and thus to create an actuation threshold that can be perceived and overcome by the operator for haptic signaling of a sequence end or of a sequence change.

15. The control device according to one of the preceding claims, **characterized in that** the rotary control element (17) is equipped to call up and/or to follow a programmed sequence of motions stored in the control device (2, 2'), for example a trajectory, through rotary motions of the actuating element (18), and that the analysis and control device (21) and the rotational resistance generating means (19) are equipped to briefly increase the rotational resistance of the actuating element (18) as a function of the activation or deactivation of additional components or additional functions, for example a compressed air nozzle, a coolant supply, a cutting tool, a welding device, or a clamping device, and thus to create an actuation threshold that can be perceived and overcome by the operator for haptic signaling of the activation or deactivation of the additional component or additional function.

16. A method for operating an electronic control device (2, 2') for industrial machines (3) having controlled motion drives (13) for machine components, wherein
a human-machine interface (6) with at least one control element (16) for manual influencing or specification of adjustment movements of at least one of the machine components is provided, wherein
at least one control element (16) is implemented as a rotary control element (17) with a continuously rotatable actuating element (18), wherein
the actuating element (18) is connected in terms of motion or can be connected in terms of motion to a rotational resistance generating means (19) that is variable under control, and wherein
the rotational mobility of the actuating element (18) is inhibited, or is subjected to an increased rotational resistance that is haptically perceptible by an operator, as a function of machine states or events that are known to the control device (2, 2') or as a function of machine states or events that can be sensed by the control device (2, 2'),
**characterized in that**
at least one caution zone is defined in the control device (2, 2') or in the analysis and control device (21), and that a reaching of the at least one caution zone is haptically signaled to an operator by driving of the rotational resistance generating means (19), in particular by creation of ripple marks or of increased actuation resistance or rotational resistance with respect to the actuating element (18).

## Revendications

1. Dispositif de commande (2, 2') pour machines industrielles avec entraînements de déplacement (13) pour des composants de machines, comprenant
une interface homme-machine (6) avec au moins un élément de commande (16) pour le contrôle manuel ou la spécification de déplacements de réglage d'au moins un des composants de machines, dans lequel
au moins un élément de commande (16) est conçu comme un élément de commande à actionneur rotatif (17) avec un organe d'actionnement rotatif sans fin (18), dans lequel l'organe d'actionnement (18) est en liaison de déplacement ou peut être mis en liaison de déplacement avec un moyen de génération de résistance à la rotation (19), dans lequel
le moyen de génération de résistance à la rotation (19) peut être contrôlé par un dispositif d'analyse et de commande (21) et dans lequel
le dispositif d'analyse et de commande (21) et le moyen de génération de résistance à la rotation (19) sont conçus pour bloquer la capacité de rotation de l'organe d'actionnement (18) ou pour le soumettre à une résistance à la rotation augmentée perceptible de manière haptique par l'opérateur, en fonction d'états de la machine connus du dispositif de commande (2, 2') ou d'événements pouvant être détectés par le dispositif de commande (2, 2'),
**caractérisé en ce que**
dans le dispositif de commande (2, 2') ou dans le dispositif d'analyse et de commande (21), est définie au moins une zone d'alarme et **en ce que** lorsque l'au moins une zone d'alarme est atteinte, grâce au contrôle du moyen de génération de résistance à la rotation (19), un signal haptique est envoyé à l'attention d'un opérateur, plus particulièrement grâce à la production d'ondulations ou d'une résistance à l'actionnement ou à la rotation par rapport à l'organe d'actionnement (18).

2. Dispositif de commande selon la revendication 1, **caractérisé en ce que** le dispositif d'analyse et de commande (21) et le moyen de génération de résistance à la rotation (19) sont conçus pour bloquer la capacité de rotation de l'organe d'actionnement (18) ou pour le soumettre à une résistance à la rotation augmentée perceptible de manière haptique par l'opérateur, lorsqu'une instruction de déplacement prévue par un opérateur au moyen de l'organe d'actionnement (18) provoquerait un déplacement de réglage du composant de machine contrôlé, par exemple d'un axe de machine, d'un outil, d'une pièce ou d'un objet de manutention, vers une position finale déterminée structurellement ou mécaniquement, vers une zone de blocage (22) ou vers une partie de blocage spatial.

3. Dispositif de commande selon la revendication 1 ou 2, **caractérisé en ce que** l'au moins une zone d'alarme est placée en amont d'une position finale déterminée structurellement ou mécaniquement, d'une zone de blocage (22) ou d'une partie de blocage spatial.

4. Dispositif de commande selon l'une des revendications précédentes, **caractérisé en ce qu'**un contrôle du moyen de génération de résistance à la rotation (19) est effectué de façon à ce qu'un mouvement de rotation de l'organe d'actionnement (18) dans un premier sens de rotation, qui signifierait un dépassement de la position finale déterminée structurellement ou mécaniquement, ou qui provoquerait une détérioration de la zone de blocage (22) ou de la partie de blocage spatial, est empêché ou bloqué et un mouvement de rotation de l'organe d'actionnement (18) dans un deuxième sens de rotation, opposé au premier sens de rotation, est autorisé ou disponible.

5. Dispositif de commande selon l'une des revendications précédentes, **caractérisé en ce que** le dispositif d'analyse et de commande (21) est conçu pour la lecture et/ou la réception et l'analyse de données ou de signaux du dispositif de commande (2, 2') de la machine industrielle (3), et **en ce que** le moyen de génération de résistance à la rotation (19) est contrôlé sur la base de ces données ou signaux du côté du dispositif d'analyse et de commande (21).

6. Dispositif de commande selon l'une des revendications précédentes, **caractérisé en ce que** le dispositif d'analyse et de commande (21) et le moyen de génération de résistance à la rotation (19) sont conçus pour modifier ou commuter, en corrélation avec différentes vitesses de déplacement, plus particulièrement en fonction de vitesses de déplacement, autorisées ou admissibles, des composants de machines, la résistance à la rotation ou la capacité de rotation de l'organe d'actionnement (18).

7. Dispositif de commande selon la revendication 6, **caractérisé en ce que** le dispositif d'analyse et de commande (21) et le moyen de génération de résistance à la rotation (19) sont conçus pour régler à une valeur faible la résistance à la rotation de l'organe d'actionnement (18) dans le cas de vitesses de déplacement admissibles élevées et de la régler à une valeur relativement élevée dans le cas de vitesses de déplacement admissibles relativement faibles.

8. Dispositif de commande selon l'une des revendications précédentes, **caractérisé en ce que** le dispositif d'analyse et de commande (21) et le moyen de génération de résistance à la rotation (19) sont conçus pour mesurer, plus particulièrement pour détecter, des écarts entre une position de consigne respectivement une vitesse de consigne souhaitée par l'opérateur ou prédéterminée et une position effective ou une vitesse effective du composant de machine contrôlé et, lors du dépassement d'une valeur seuil prédéfinie de cet écart ou, en fonction d'une étendue de cet écart, pour modifier, plus particulièrement pour augmenter, la résistance à la rotation de l'organe d'actionnement (18).

9. Dispositif de commande selon l'une des revendications précédentes, **caractérisé en ce qu'**il est conçu pour convertir un actionnement rotatif continu de l'organe d'actionnement (18) en un déplacement continu, corrélé temporellement, du composant de machine contrôlé.

10. Dispositif de commande selon l'une des revendications précédentes, **caractérisé en ce qu'**il est prévu pour le contrôle des processus d'une machine de moulage par injection (23) et provoque le blocage ou l'empêchement de la capacité de rotation d'un organe d'actionnement (18) pour l'activation d'une unité d'éjection (27) lorsqu'un outil de moulage (26) de la machine de moulage par injection (23) se trouve dans son état fermé.

11. Dispositif de commande selon l'une des revendications 1 à 9, **caractérisé en ce qu'**il est prévu pour le contrôle des processus d'un robot industriel (4) et provoque le blocage ou l'empêchement de la capacité de rotation d'un organe d'actionnement (18) au moins le long d'un premier sens de rotation lorsqu'un actionnement rotatif manuel de cet organe d'actionnement (18) le long du premier sens de rotation provoquerait un passage du robot industriel (4), d'un de ses bras, de son TCP, de son outil ou de sa pièce, dans une zone de blocage (22) ou dans une partie de blocage spatial.

12. Dispositif de commande selon l'une des revendications précédentes, **caractérisé en ce que** le dispositif d'analyse et de commande (21) et le moyen de génération de résistance à la rotation (19) sont conçus pour augmenter, lors de l'approche d'un composant de machine de la machine contrôlée (3) d'une position finale déterminée structurellement ou d'une zone de blocage (22) prédéfinie ou d'une partie de blocage spatial prédéfinie, la résistance à la rotation au niveau de l'organe d'actionnement (18).

13. Dispositif de commande selon l'une des revendications précédentes, **caractérisé en ce que** l'élément de commande à actionneur rotatif (17) est conçu pour appeler séquentiellement, à l'aide de mouvements de rotation de l'organe d'actionnement (18), un processus de déplacement programmé, plus particulièrement une trajectoire de déplacement enregistrée dans le dispositif de commande (2, 2') et **en ce que** le dispositif d'analyse et de commande (21) et le moyen de génération de résistance à la rotation (19) sont conçus pour modifier, plus particulièrement augmenter ou diminuer, la résistance à la rotation de l'organe d'actionnement (18) en fonction de la vitesse de déplacement de la machine (3) ou du composant de machine contrôlé respectivement.

14. Dispositif de commande selon l'une des revendications précédentes, **caractérisé en ce que** l'élément de commande à actionneur rotatif (17) est conçu pour appeler, respectivement parcourir séquentiellement des séquences d'un processus de déplacement programmé enregistré dans le dispositif de commande (2, 2'), par exemple une trajectoire de déplacement, à l'aide de mouvements de rotation de l'organe d'actionnement (18) et **en ce que** le dispositif d'analyse et de commande (21) et le moyen de génération de résistance à la rotation (19) sont conçus pour augmenter brièvement la résistance à la rotation de l'organe d'actionnement (18) et générer ainsi un seuil d' actionnement perceptible et surmontable par l'opérateur, pour la signalisation haptique d'une fin de séquence ou d'un changement de séquence.

15. Dispositif de commande selon l'une des revendications précédentes, **caractérisé en ce que** l'élément de commande à actionneur rotatif (17) est conçu pour appeler, respectivement parcourir un processus de déplacement programmé enregistré dans le dispositif de commande (2, 2'), par exemple une trajectoire de déplacement, à l'aide de mouvements de rotation de l'organe d'actionnement (18) et **en ce que** le dispositif d'analyse et de commande (21) et le moyen de génération de résistance à la rotation (19) sont conçus pour augmenter brièvement la résistance à la rotation de l'organe d'actionnement (18) en fonction de l'activation ou de la désactivation de composants supplémentaires ou de fonctions supplémentaires, par exemple une buse à air comprimé, une alimentation en fluide de refroidissement, un outil d'usinage, un dispositif de soudage ou un dispositif de serrage et pour générer ainsi un seuil d'actionnement perceptible et surmontable par l'opérateur, pour la signalisation haptique d'une activation ou désactivation du composant supplémentaire ou de la fonction supplémentaire.

16. Procédé de fonctionnement d'un dispositif de commande électronique (2, 2') pour des machines industrielles (3) avec des entraînements de déplacement contrôlés (13) pour des composants de machines, dans lequel
une interface homme-machine (6) est prévue, avec au moins un élément de commande (16) pour le contrôle manuel ou la spécification de déplacements de réglage d'au moins un des composants de machines, dans lequel
au moins un élément de commande (16) est conçu comme un élément de commande à actionneur rotatif (17) avec un organe d'actionnement rotatif sans fin (18), dans lequel l'organe d'actionnement (18) est en liaison de déplacement ou peut être mis en liaison de déplacement avec un moyen de génération de résistance à la rotation (19), dans lequel
la capacité de rotation de l'organe d'actionnement (18) est bloquée ou soumise à une résistance à la rotation augmentée perceptible de manière haptique par l'opérateur, en fonction d'états de la machine ou d'événements connus du dispositif de commande (2, 2') ou pouvant être détectés par le dispositif de commande (2, 2'),
**caractérisé en ce que**
dans le dispositif de commande (2, 2') ou dans le dispositif d'analyse et de commande (21), est définie au moins une zone d'alarme et **en ce que** lorsque l'au moins une zone d'alarme est atteinte, grâce au contrôle du moyen de génération de résistance à la rotation (19), un signal haptique est envoyé à l'attention d'un opérateur, plus particulièrement grâce à la production d'ondulations ou d'une résistance à l'actionnement ou à la rotation par rapport à l'organe d'actionnement (18).
